Europäisches Patentamt

European Patent Office

Office européen des brevets

(11) Publication number: **0 301 379 B1**

## (12) EUROPEAN PATENT SPECIFICATION

(45) Date of publication of patent specification: **02.01.92**　(51) Int. Cl.⁵: **B60H 1/00**, G05G 9/08

(21) Application number: **88111592.7**

(22) Date of filing: **19.07.88**

(54) Control device for motor vehicle air-conditioning systems.

(30) Priority: **21.07.87 IT 5353987**

(43) Date of publication of application:
**01.02.89 Bulletin 89/05**

(45) Publication of the grant of the patent:
**02.01.92 Bulletin 92/01**

(84) Designated Contracting States:
**DE ES FR IT SE**

(56) References cited:
**EP-A- 0 149 397**
**US-A- 2 912 873**
**US-A- 4 383 642**

(73) Proprietor: **BORLETTI CLIMATIZZAZIONE S.r.l.**
**Frazione Masio, 24**
**I-10046 Poirino (Torino)(IT)**

(72) Inventor: **Baro, Sergio**
**Via Montelera 14/A**
**I-10040 Val Della Torre (Torino)(IT)**

(74) Representative: **Ouinterno, Giuseppe et al**
**c/o Jacobacci-Casetta & Perani S.p.A. Via**
**Alfieri, 17**
**I-10121 Torino(IT)**

Rank Xerox (UK) Business Services

## Description

The present invention relates to a control device, particularly for motor vehicle air-conditioning systems, comprising a support structure, a single control member supported by the structure for rotation about an axis of rotation, and one pair of members driven by the control member through respective transmission means, wherein the control member has a circular slot coaxial with the axis of rotation and provided with radial L-shaped end stops.

Such a control device is known from US-A-2912873, in which the control member drives directly two Bowden wires. Such technical solution is quite complicated since two plates with parallel straight slots have to be used in which the pins joined to the wires are slidably mounted.

EP-A-149397 discloses a control device with a control member having an annular cam adapted to cooperate with two levers which are articulated about the same axis. This solution needs and accurate working of the annular cam and needs also a wide rotation of the control member in order to drive the levers from one working condition to the other.

The object of the present invention is to provide a device of the above type which does not present the above drawbacks and which is simple and cheap to produce.

According to the invention, this object is achieved by virtue of the fact that the transmission means include one pair or rotatable lever members which are articulated to the support structure about two distinct axes substantially parallel to and distinct from the axis of rotation of the control member and are provided with abutment pins adapted to cooperate either with the circular slot or with the radial stops of the control member to keep the lever members in fixed positions or to cause their rotation, respectively.

The present invention will now be described in detail, purely by way of non-limiting example, with reference to the appended drawings, in which:

Figure 1 is a schematic view of a control device according to the invention in a first configuration,

Figure 2 is a view similar to Figure 1 and shows the device in a second configuration, and

Figure 3 is a view similar to Figures 1 and 2 shows the device in a third configuration.

With reference to the drawings, a control device for a motor vehicle air-conditioning system is generally indicated 10 and is provided with a casing A which is adapted to house heat exchangers, air ducts, etc., and has a first aperture B and a second aperture C controlled by respective shutters 12 and 14 operated by the device 10 through transmission means T.

The control device 10 comprises a support structure 16 which is fixed to the casing A and to which is articulated a shaped plate 18 that is rotatable about an axis 20 and is rotated in known manner by a manual system or by a geared motor (not illustrated). The rotatable plate 18 has a circular slot 22 coaxial with the axis 20 of rotation of the plate and provided with respective L-shaped end portions 22a and 22b directed radially substantially towards the axis of rotation of the plate. The transmission means T associated with the shutter 12 of the aperture B comprise a lever 24 articulated at 26 to the structure 16 and provided with one arm 24a having a pin 28 with an axis substantially parallel to the axis 20 of the rotatable plate 18, and a second arm 24b to which is articulated a shaft 30 for controlling the shutter 12. Similarly, the transmission means T for effecting the rotation of the shutter 14 associated with the aperture C comprise a second lever 32 articulated at 33 to the support structure 16 and having a first arm 32a provided with a pin 34 and a second arm 32b articulated to a shaft 36 for controlling the shutter 14.

Both the pins 28 and 34 of the first and second levers 24 and 32, respectively, have diameters corresponding to the width of the slot 22, as well as to the width of the portions 22a and 22b of the slot.

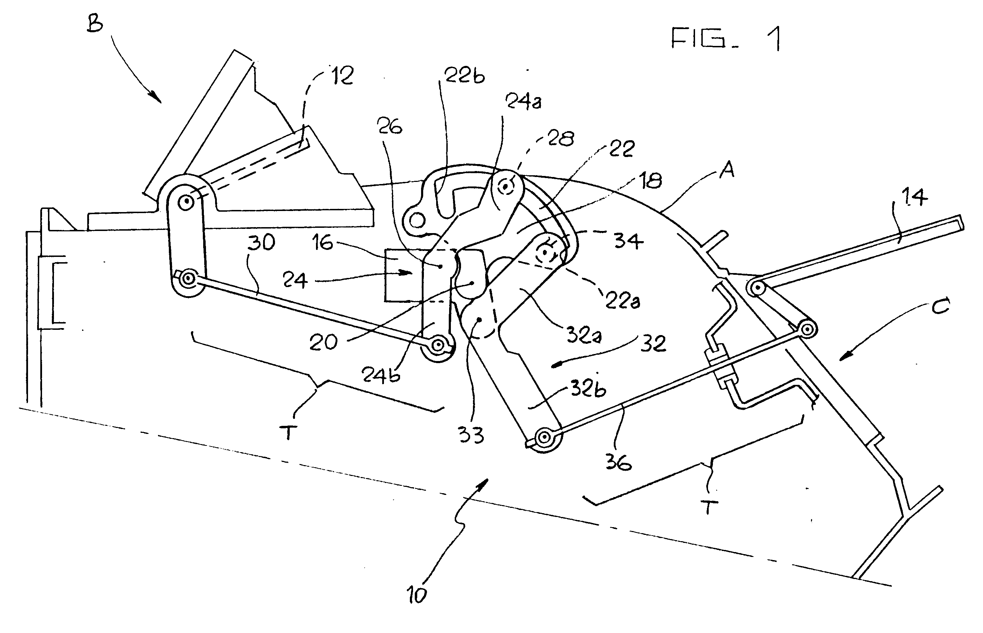

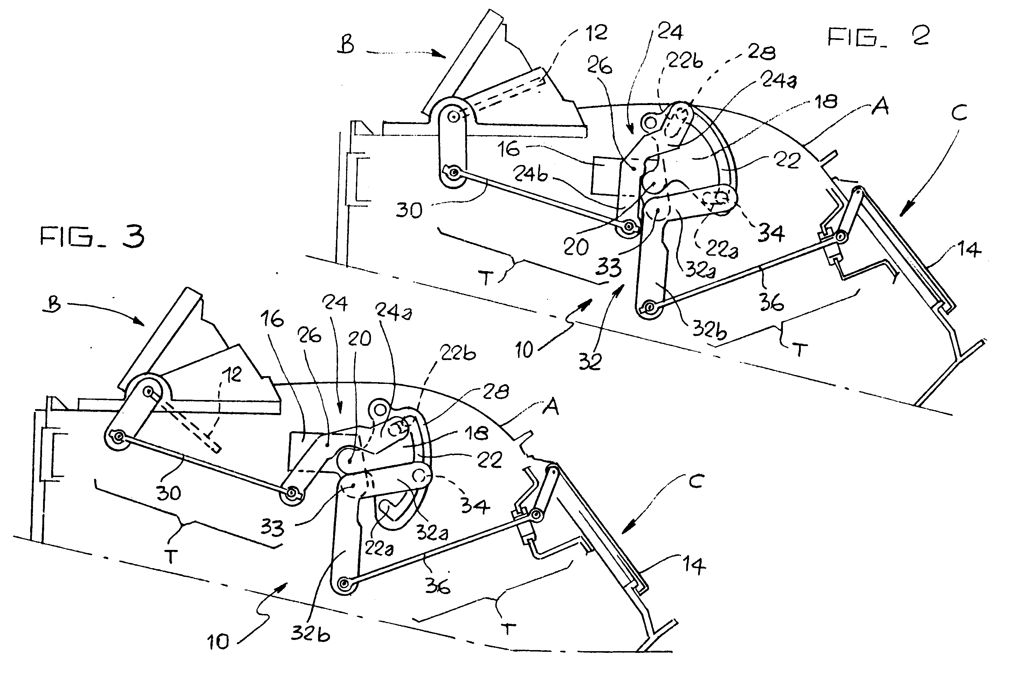

In the configuration illustrated in Figure 1, the shutter 14 is open, while the shutter 12 closes the aperture B. In this configuration, if the plate 18 is rotated clockwise, the pin 34 of the second lever 32 cooperates with the L-shaped end portion 22a of the slot 22 to cause the clockwise rotation of the second lever 32 and the consequent closure of the shutter 14. Simultaneously, given the offset between the axis 20 of the plate 18 and the axis of articulation 33 of the second lever 32, the pin 34 moves radially along the radial portion 22a of the slot 22 until it is in the configuration shown in Figure 2, in which the pin can start to slide relative to the circular portion of the slot 22. During the rotation of the second lever 32, the first lever 24 is kept in a fixed position, since the rotation of the slot 22 about its own axis 20 and the rotation of the second lever 24 about the offset axis 26 define a predetermined point of intersection.

When the configuration of Figure 2 is reached, that is, when the shutter 14 associated with the aperture C is closed, the pin 28 of the first lever 24 abuts the radial portion 22b of the slot 22. Similarly, as already stated above, upon the subsequent clockwise rotation of the plate, the pin 34 of the second lever 32 moves away from the radial portion 22a of the slot 22.

As the plate 18 continues to rotate clockwise, the first lever 24 starts to rotate clockwise about its axis 26, while the second lever 32 is kept immobile in the position resulting from the intersection between the circular slot 22 and the circumference described by the pin 34 about the axis of rotation 33. During this rotation, the pin 28 of the first lever 24 moves radially in the radial portion 22b of the slot 22. Thus, the configuration illustrated in Figure 3 is achieved, in which the shutter 14 remains closed and the shutter 12 is rotated by the shaft 30 and the first lever 24.

If the sense of rotation of the rotatable plate 18 is reversed, the operation of the device 10 is just the same, causing progressive closure of the shutter 12 with the shutter 14 in the closed position, and subsequent progressive opening of the shutter 14, while the shutter 12 is kept in the closed condition.

## Claims

1. A control device for motor vehicle air-conditioning systems, comprising a support structure (16), a single control member (18) supported by the structure and rotatable about an axis of rotation (20), and a pair of members (12, 14) driven by the control member (18) through respective transmission means (T), wherein the control member (18) has a circular slot (22) coaxial with the axis of rotation (20) and provided with radial L-shaped end stops (22a, 22b), characterized in that the transmission means (T) include one pair of rotatable lever members (24, 32) which are articulated to the support structure (16) about two distinct axes (26, 33) substantially parallel to and distinct from the axis of rotation (20) of the control member (18) and are provided with abutment pins (28, 34) adapted to cooperate either with the circular slot (22) or with the radial L-shaped end stops (22a, 22b) of the control member (18) to keep the lever members (24, 32) in fixed positions or to cause their rotation, respectively.

2. A control device according to claim 1, characterized in that each lever member (24, 32) comprises a first arm (24a, 32a) to which the abutment pin (28, 34) adapted to cooperate with the slot and end stops (22, 22a, 22b) is fixed, and a second arm (24b, 32b) to which a shaft (30, 36) for operating the respective rotatable member (12, 14) is articulated.

## Revendications

1. Dispositif de commande pour systèmes de conditionnement d'air de véhicule à moteur, comportant une structure de support (16), un élément de commande unique (18) supporté par la structure et pouvant tourner autour d'un axe de rotation (20), et une paire d'éléments (12, 14) entraînés par l'élément de commande (18) par l'intermédiaire de moyens de transmission respectifs (T), dans lequel l'élément de commande (18) possède une fente circulaire (22) coaxiale à l'axe de rotation (20) et pourvue de butées d'extrémité en forme de L radiales (22a, 22b), caractérisé en ce que les moyens de transmission (T) comportent une paire d'éléments de levier rotatifs (24, 32) qui sont articulés sur la structure de support (16) autour de deux axes distincts (26, 33) sensiblement parallèles à et distincts de l'axe de rotation (20) de l'élément de commande (18) et sont pourvus d'axes de butée (28, 34) prévus pour coopérer avec la fente circulaire (22) ou bien avec les butées d'extrémité en forme de L radiales (22a, 22b) de l'élément de commande (18) afin respectivement de maintenir les éléments de levier (24, 32) dans des positions fixes ou d'entraîner leur rotation.

2. Dispositif de commande selon la revendication 1, caractérisé en ce que chaque élément de levier (24, 32) comporte un premier bras (24a, 32a) auquel est fixé l'axe de butée (28, 34) prévu pour coopérer avec la fente et les butées d'extrémité (22, 22a, 22b), et un deuxième bras (24b, 32b) sur lequel est articulé un arbre (30, 36) destiné à actionner l'élément rotatif respectif (12, 14).

## Patentansprüche

1. Steuerungsvorrichtung für Kraftfahrzeug-Klimaanlagen mit einer Tragkonstruktion (16), einem an dieser Tragkonstruktion gelagerten einzelnen Steuerglied (18), das um eine Rotationsachse (20) drehbar ist, undeinem Paar von Elementen (12, 14), die über entsprechende Transmissionsmittel (T) von dem Steuerglied (18) angetrieben werden, wobei das Steuerglied (18) einen zu der Rotationsachse (20) koaxialen kreisbogenförmigen Schlitz (22) mit radialen L-förmigen Endanschlägen (22a, 22b) aufweist, dadurch gekennzeichnet, daß die Transmissionsmittel (T) ein Paar drehbarer Hebelelemente (24, 32) umfassen, die an der Tragkonstruktion (16) um zwei getrennte Achsen (26, 33) schwenkbar angeordnet sind, wobei diese Achsen im wesentlichen parallel zu der Rotationsachse (20) des Steuerglieds (18) und von dieser getrennt sind, und daß die Hebelelemente (24, 32) Anschlagstifte (28, 34) besitzen, die entweder mit dem kreisbogenförmigen Schlitz (22) oder mit den radialen L-förmigen Endanschlägen (22a, 22b) des Steuerglieds (18) zusammenwirken können, um die Hebelelemente (24, 32) in festen Positionen zu halten bzw. ihre Drehung zu bewirken.

2. Steuervorrichtung nach Anspruch 1, dadurch gekennzeichnet, daß jedes Hebelelement (24, 32) einen ersten Arm (24a, 32a) aufweist, an dem der Anschlagstift (28, 34) befestigt ist, der mit dem Schlitz und den Endanschlägen (22, 22a, 22b) zusammenwirken kann, sowie einen zweiten Arm (24b, 32b), an dem eine Stange (30, 36) zur Betätigung des betreffenden drehbaren Elements (12, 14) angelenkt ist.

FIG. 1

B

12

22b

26    24a

28    22

18    A

30    16    34

24

22a

20    24b

32a    32

33    32b

14

C

36

T

T

10

EP 0 301 379 B1

FIG. 2

FIG. 3

EP 0 301 379 B1